# EUROPEAN PATENT APPLICATION

(11) **EP 4 644 335 A1**
(43) Date of publication of application: **05.11.2025**
(21) Application number: 24020133.5
(22) Date of filing: 29.04.2024
(51) Int. Cl.: C02F 1/461, C02F 1/467, C02F 101/30, C02F 101/34, C02F 101/36, C02F 103/34

(54) **CERAMIC-CARBON FOAM ELECTRODES ENRICHED WITH METAL OXIDES, THEIR METHOD OF PREPARATION, AND USE IN ELECTRO-OXIDATION REACTORS**

(71) Applicant: Instytut Biotechnologii I Medycyny Molekularnej, 80-180 Gdansk (PL); SensDx S.A., 80-180 Gdansk (PL)
(72) Inventor: Nidzworski, Dawid, 80-180 Gdansk (PL); Zoledowska, Sabina, 80-180 Gdansk (PL); Ossowski, Tadeusz, 80-241 Gdansk (PL); Skowierzak, Grzegorz, 84-230 Rumia (PL); Jakóbczyk, Pawel, 61-148 Poznan (PL)
(74) Representative: Matyka, Malgorzata

(57) **Abstract**

The invention relates to ceramic-carbon foam electrodes enriched with metal oxides, the method of obtaining them and the use of these electrodes to photo-electro-oxidation reactors for organic compounds.

## Description

The invention relates to ceramic-carbon foam electrodes enriched with metal oxides, the method of obtaining them and the use of these electrodes to photo-electro-oxidation reactors for organic compounds.

Electrochemical reactors, also known as electrolyzers, are a special class of devices for conducting electrochemical reactions, which are based on the conversion of energy between chemical reactions and electrical energy. Their main purpose is to realize oxidation (at the anode) and reduction (at the cathode) in solution at the electrode/solution interface.

This process can be carried out in reactors with separate cathode and anode zones, which prevents re-oxidation of reduction products. However, the separation of cathode and anode zones can significantly complicate electrolyzer systems. From this point of view, in the context of water purification/treatment technology, we proposed a design in which we do not separate the reactor zones.

In p-ractice, the lack of zone separation does not usually result in significant changes in the final products of the reaction, because the reduction/oxidation potentials of the individual chemicals are different, making it impossible to reduce the oxidation products again. In addition, the oxidation products may undergo a series of subsequent chemical reactions that prevent the reconstruction of the starting substrate of the anodic reaction.

The removal of pollutants from environmental and waste water is based on their oxidation by an electrochemical process on the surface of a carbon electrode. The main end product is carbon dioxide. The process also produces simple organic derivatives, such as simple carboxylic acids, alcohols, whose concentration and toxicity levels do not pose a threat to the evironment.

Wastewater treatment methods include physical, chemical and biological approaches and their combinations. To date, various solutions of equipment for degradation and removal of the above-mentioned compounds from wastewater are known. The most common processes used in these devices are physical adsorption and membrane filtration, as well as electrolysis, photolysis and other oxidation methods. The state of the art. Also reveals equipment solutions that use electrolysis processes.

Chemical processes, such as coagulation and neutralization, require significant amounts of chemicals. Advanced Oxidation Processes (AOPs), including Electrochemical Oxidation Processes (EAOPs), use the generation of highly reactive hydroxyl radicals ·OH to break down impurities. Porous vitreous carbon (RVC) electrodes and mixed metal oxide (MMO) coated titanium anodes are widely used in wastewater treatment. Due to their three- dimensional structure, RVC electrodes overcome the performance limitations of electrochemical processes.

Activated carbon fibres for oil wastewater treatment and methods for their regeneration are known from invention description CN103435132A. The method combines adsorption, electrolysis and desorption of oil using an electrochemical device, where the activated carbon fibres act as anodes and the titanium mesh acts as cathodes.

In the application CA2398851A1 describes ceramic catalysts with lattice structure that are active in various oxidation reactions. Methods for preparing these structures and processes for converting light hydrocarbons into carbon monoxide and hydrogen products using these catalysts are described.

Patent WO9212931A1 describes a device and method for the direct oxidation of organic waste. The device includes an electrochemical cell containing a carbon felt anode and a platinum cathode separated by an aluminium baffle, and an electrolyte.

Invention CN106966487A relates to a method for photocatalytic decomposition of waste water containing acetamidophenol (paracetamol) using lanthanum nitrate and bismuth motrate for doping with zinc nitrate to produce Bi/La composites based on zinc nano-oxide. Based on Chinese patent application CN113428927A, the method for removing paracetamol frompharmaceutical wastewater involves using microporous filtration to treat the wastewater, removing suspended substances and measuring the concentration of paracetamol in the wastewater.

A number of solutions using electrochemical processes to remove organic compounds from water and wastewater have been reported in the literatura.

Electroosmosis with oxide electrodes uses electroosmosis to move contaminants across a ceramic membrane. This phenomenon allows ions to move efficiently across the membrane in response to an electric field, enabling the removal of organic compounds and salts (Li, X., Zhang, C., Su, B., & Ma, J., 2019).

Carbon electrode electrofiltration involves filtration through a carbon layer that effectively traps contaminants. The process uses both adsorption and electrophagocytosis to remove a variety of contaminants, including organics and chlorinated organic compounds (Wang, H., & Gao, B., 2016).

Ceramic oxide electrodes containing titanium oxides or iridium oxides for the electrochemical removal of oxidation (oxidation or reduction) pollutants such as nitrogen compounds and organic pollutants (Zhao, Y, Liao, Q., Zhang, B., & Yao, W., 2019).

Nanoporous carbon electrodes for adsorption and electrooxidation use nanostructured carbon electrodes for adsorption and oxidation of pollutants. The nanostructure of carbon electrodes increases the surface area and efficiency of adsorption and oxidation to remove pesticides and dyes (Wu, F., Feng, C., Zhao, C., Deng, N., & Deng, J., 2019).

Diamond electrodes, which are very stable chemically and electrically, are effective in electrooxidation processes and remove impurities with high efficiency, including chlorinated compounds and phenols (Xing, L., Wang, Y, & Li, G., 2017).

Silicon carbide electrodes for electrocoagulation are based on electrodes made of silicon carbide, which are characterized by high electrical conductivity and chemical stability. The electrocoagulation process using silicon carbide electrodes effectively removes heavy metals and oils (Wang, Z., Wang, L., Zhu, Y, & Zhou, Q., 2018).

Transition metal oxide electrodes for electrochemical oxidation use transition metal oxide electrodes, such as manganese oxide or cobalt oxide. These materials are cathodically active and can be used for electrochemical oxidation of pollutants such as pesticides and phenolic compounds (Zhang, Y, Wang, C., Li, J., & Zhang, G., 2016).

Aluminium electrodes for electrocoagulation are based on the production of aluminium oxide, which is active in electrocoagulation processes. They are effective in removing various impurities, especially dyes and organic substances. (Lin, C., Wang, Y., Wu, C., & Huang, C., 2019).

Boron carbide electrodes for electrooxidation use boron carbide electrodes, which have high electrical conductivity and chemical durability. They are effective in electrooxidation processes, removing pesticides and chlorinated compounds. (Zhang, Y., Li, G., Zhang, W., & Huang, Y., 2018).

Carbide electrodes for electrofiltration use carbide electrodes that are active in electrofiltration processes. They are effective in retaining various contaminants, especially organic compounds such as pesticides and phenolic compounds. (Li, W., Jiang, W., & Yu, H., 2021).

Silicon carbide electrodes for electro-oxidation use silicon carbide electrodes, which are chemically stable and exhibit high electrical conductivity. They are effective in electro-oxidation processes to remove a variety of contaminants, including chlorinated compounds and pesticides. (Ghanbari, F., Ismail, A. F., & Aziz, M., 2016).

Metal oxide electrodes for electrofiltration use metal oxide electrodes that have adsorption and catalytic properties. They are effective in electrofiltration processes to remove contaminants such as heavy metals and organic compounds from water. (Luo, W., Chen, S., & Zhou, J., 2017).

Titanium carbide electrodes for electrocoagulation use titanium carbide electrodes, which are durable and have good electrical conductivity. They are effective in electrocoagulation processes to remove contaminants from water, including organics and dyes. (Gao, H., Liu, L., & Qu, J., 2019).

Zinc oxide electrodes for electrochemical oxidation use zinc oxide electrodes that are active in electrochemical oxidation processes. They are effective in removing pollutants, especially organic compounds such as pesticides and phenolic compounds (He, Y, Li, Y, & Huang, Y, 2018).

Silicon carbide electrodes for electrocoagulation are based on electrodes made of this material, which is characterized by high electrical conductivity and chemical stability. The electrocoagulation process using silicon carbide electrodes effectively removes heavy metals and oils. (Wang, Z., Wang, L., Zhu, Y, & Zhou, Q., 2018).

Transition metal oxide electrodes for electrochemical oxidation use materials such as manganese oxides or cobalt oxides. These electrodes are cathodically active and can be used to oxidize pollutants, including pesticides and phenolic compounds. (Zhang, Y, Wang, C., Li, J., & Zhang, G., 2016).

Alumina electrodes for electrocoagulation are based on electrodes made of this material, which are active in coagulation processes. They are effective in removing various impurities, especially dyes and organic substances. (Lin, C., Wang, Y, Wu, C., & Huang, C., 2019).

Boron carbide electrodes for electrooxidation are based on materials with high electrical conductivity and chemical resistance. They are effective in the removal processes of pesticides and chlorinated compounds. (Zhang, Y, Li, G., Zhang, W., & Huang, Y, 2018).

Carbide electrodes for electrofiltration use electrodes made of this material, which are active in filtration processes. They are effective in retaining various pollutants, especially organic compounds such as pesticides and phenolic compounds. (Li, W., Jiang, W., & Yu, H., 2021).

Silicon carbide electrodes for electrooxidation are based on materials that are chemically stable and exhibit high electrical conductivity. They are effective in removing a variety of pollutants, including chlorinated compounds and pesticides. (Ghanbari, F., Ismail, A. F., & Aziz, M., 2016).

Metal oxide electrodes for electrofiltration use materials with adsorptive and catalytic properties. They are effective in filtration processes to remove contaminants such as heavy metals and organic compounds from water. (Luo, W., Chen, S., & Zhou, J., 2017).

Titanium carbide electrodes for electrocoagulation are based on durable electrodes with good electrical conductivity. They are effective in coagulation processes to remove impurities from water, including organic substances and dyes. (Gao, H., Liu, L., & Qu, J., 2019).

RVC (rectified carbon foam) electrodes are used to effectively remove of organic contaminants such as drugs, pharmaceuticals and other organic compounds. Various applications of RVC electrodes in the removal of different types of contaminants are described below:
The removal of pharmaceuticals from wastewater is presented in the following publication:
RVC electrodes can be used to electrochemically degrade drugs present in wastewater, such as ibuprofen, paracetamol and diclofenac. An exemplary study by Zhang, Y., Zhang, Y., & Zhou, J. (2020) demonstrates the effectiveness of this method.

The removal of pharmaceuticals from drinking water is described in the following publication:
For the removal of pharmaceuticals such as carbamazepine from drinking water, RVC electrodes can be used for electrochemical degradation. A study by Hu, Y., Zhang, H., & Wang, J. (2017) demonstrates the effectiveness of this method.

Bisphenol A (BPA) removal from wastewater represents:
RVC electrodes can be used for the electrochemical degradation of bisphenol A (BPA) present in wastewater, as confirmed by a study by Wang, L., Lin, S., & Tseng, W. (2017). A structurally novel carbon foam derived from argan nut shells (ANS) was developed and used to remove bisphenol A (BPA) from water. Wang, H., & Jiang, J. (2019).

Removal of triclosan from drinking water presents:
RVC electrodes can be effectively used for electrochemical decomposition in the removal of triclosan, an antibacterial substance in drinking water, as shown in a study by Huang, Z., & Jiang, J. (2018).

Deactivation of pharmaceuticals in surface water:
RVC electrodes can be used to electrochemically degrade pharmaceutical compounds present in surface waters, preventing potential negative impacts on aquatic ecosystems, as described in a study by Liu, X., Jiang, J., & Huang, Z. (2020).

Removal of chloramphenicol from drinking water:
RVC electrodes can be used for electrochemical degradation of chloramphenicol, an antibiotic present in drinking water, as described in a study by Sun, B., & Li, X. (2019).

Removal of estrogens from wastewater:
RVC electrodes can be used to electrochemically degrade estrogens such as estradiol or ethinylestradiol present in wastewater, according to a study by Lefebvre, O., & Moletta, R. (2016).

Removal of preservatives from drinking water:
RVC electrodes can be used to electrochemically remove preservatives such as methylisothiazolinone from drinking water, according to a study by Wang, J., & Liu, H. (2016).

Removal of contaminants generated in the manufacturing process:
RVC electrodes can be used to remove a variety of organic contaminants generated during the industrial production process, such as dyes or chemicals, as described in a study by Zhang, H., Wang, J., & Liu, H. (2018).

Removal of residual cleaning agents from wastewater:
RVC electrodes can be used for electrochemical degradation of cleaning agent residues, such as surfactants or detergents, present in wastewater, as shown in a study by Wang, J., & Zhao, L. (2016).

The purpose of the invention is to construct and use ceramic-carbon foam electrodes enriched with metal oxides to purify environmental water from organic compounds therein.

The subject matter of the invention is a system for the degradation (ceramic-carbon foam electrodes enriched with metal oxides) and removal of organic compounds including pharmaceuticals (*paracetamol, diklofenac*), bactericidal compounds used in cosmetology (*triclosan*), compounds used in the synthesis and processing of polymers (BPA, 6-PPD) in water and wastewater. In particular, the removal of pharmaceuticals, herbicides and pesticides used in agricultural production and fish farming.

The invention relates to a reactor for the photo-electro-oxidation of organic compounds it is in the form of a tube, in the interior of which there are carbon porous electrodes in the form of discs, the carbon anode structure is insulated from the material by means of a polymer mesh, in the lower and upper parts of the reactor there are quick couplers with two half-clamp collars.

The reactor is the tube is the cathode and the carbon electrodes are the anode.

The reactor where the discs are adapted to the inner diameter of the reactor.

The reactor where the anode is CWE electrodes with dimensions of 5x2 cm, the cathode is a stainless steel tube with external dimensions of 6x13 cm and wall thickness 2 mm.

The inevetion also relates to a method of operating of the reactor defined above which consists of:
- injecting the medium into a tank to which diclofenac, caffeine, paracetamol, triclosan and bisphenol were added to obtain a concentration of 10 mg/L each,
- the medium circulates in a closed circuit, thanks to pumps, the control system takes samples of the electrolyzed medium while the electrolyzer is running,
- the electrolysis process is carried out at 22⁰C/240 min,
- the electrolysis process is controlled by an automatic sensor control system,
- the electrolysis process is controlled b yan automatic sensor control system, which is controlled a logic algorithm that collects measurement data from the sensor cell and the reactor executive system, i.e. pump, reactor electrical power supply.
- the signals are received by a system of measurement cards which record the data during the electrolysis in a computer, the data analysis makes it posible to monitor and predict the course of the reaction in progess, where, if necessary, the logic controls the voltage current values and the flow of liquid in the reactor by means of an artificial intelligence algorithm.

Use of the reactor defined above for the treatment of environmental waters from organic compounds, advantageously from pharmaceuticals, from germicidal compounds, from compounds used in the synthesis of polymers.

The use where the pharmaceuticals are paracetamol, diclofenac.

The use where the bactericidal compounds are triclosan.

The use where the compounds used in the synthesis and processing of polymers are BPA, 6-PPD.

The terms used above and in the patent description and the patent claims, have the following meanings, but are not intended to limit their application:
**Environmental water** - water used for domestic purposes, e.g.. in swiming pools, water from sewage treatment, water for fish farming.

**Artificial wastewater** -water from which the main constituents normally found in natural municipal wastewater in similar concentration in accordance with the standard, for example: PN-87/C04616.10.

**Medium** - solution, test environment.

### Brief description of the drawings:

**Fig.1** - shows a schematic of the reactor: *a)* semi-pilot scale reactor, b) laboratory scale reactor, H) sensor cell,
**Fig.2** - shows the morphology of the elemental composition of porous carbon-ceramic material (Surface imagining using SEM with EDX).
**Fig.3** - shows electrolysis carried out on carbon ceramic electrodes (CWE) for 3 different currents of 50, 125 and 250 mA in an environmental sample.
**Fig.4** - shows electrolysis performance on carbon ceramic electrodes (CWE) for 3 different currents of 50 mA (A), 125 mA (B) and 250 mA (C) in an environmental sample containing triclosan.
**Fig.5** - shows electrolysis carried out on carbon ceramic electrodes (CWE) for 3 different currents of 50, 125 and 250 mA in an artificial wastewater sample with 10 mg each of diclofenac, caffeine, paracetamol, triclosan and bisphenol A.
**Fig.6** - shows electrolysis carried out on carbon ceramic electrodes (CWE) for 3 different currents of 50 mA (A), 125 mA (B) and 250 mA (C) in artificial wastewater containing triclosan.
**Fig.7** - shows electrolysis carried out on carbon ceramic electrodes (CWE) for a current of 125 mA in artificial wastewater with mixed diclofenac, caffeine, paracetamol, triclosan and bisphenol A (A) and the course of changes in triclosan concentration during electrolysis (B).

The invention is illustrated by the following examples, which do not constitute a limitation of the invention.

### Example 1

An electrochemical reactor is a system consisting of a tank (tube) filled with a layer of porous ceramic carbons and a control system containing a set of measuring sensors (conductivity, pH, redox, oxygen probe, turbidity, flow meter), as well as recording current and voltage during the operation of the reactor. The control (sensor) system, thanks to the installed pumps, samples the electrolyzed medium during electrolyzer operation. Signals are taken by a system of measurement cards recording data during electrolysis in a computer. Data analysis allows monitoring and predicting the course of the ongoing reaction. Depending on the needs, the logic system controls the voltage current values and fluid flow in the reactor using an artificial intelligence algorithm.

The research developed a reactor with a monitoring and control system. The control was developed on the basis of a logic algorithm collecting measurement data from the sensory cell and the reactor's executive system (pump, reactor's electrical power supply).

In the proposed final solution, the reactor was designed in the form of a tube made of stainless steel. Inside, carbon porous electrodes were placed in the form of discs closely matched to the inner diameter. The carbon anode structure is insulated from the reactor wall (cathode) by a polymeric mesh so as to prevent contact between the electrodes and thus short-circuit the cathode and anode.

In the lower and upper part of the reactor there are quick-connectors with two half-clamps, which allows you to mount the stubs for the input and output of environmental water or medium, as well as the electrical connection (in the upper part of the reactor).

Carbon anodes in the form of a cylinder filling the tubular reactor along its entire length or consisting of multiple electrodes are connected to each other by means of porous carbon felt (sponge) to guarantee electrical contact. Direct electrical contact to the bed is realized by means of a metal that does not corrode under the operating conditions of the reactor (platinum, stainless steel).

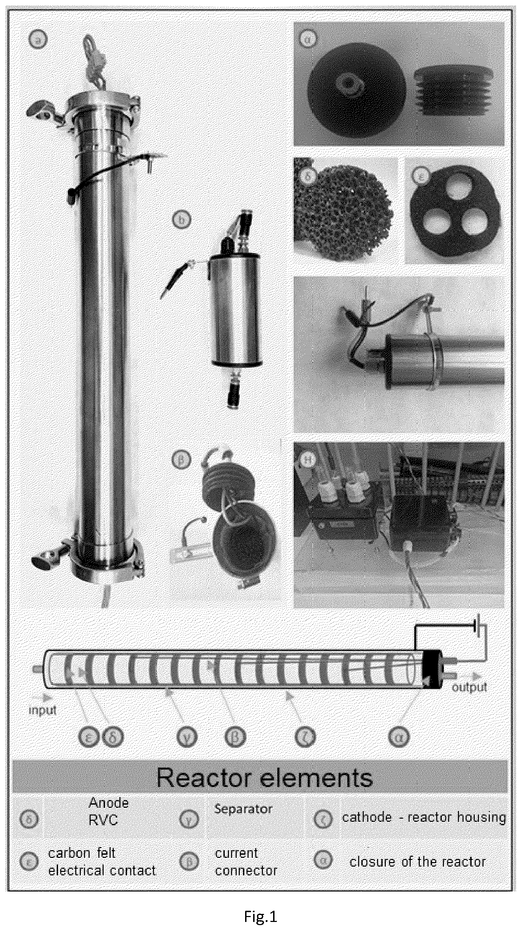

### Components (Fig.1):

1 - Anode RVC
2 - Cathode-reactor housing
3 - Separator
4 - Carbon felt spacer
5 - Current connector
6 - Closure of the reactor

### Electrodes

Porous ceramic materials with various fillers (carbon, TiO₂, K₂VO₃, Fe₃O₄, Fe₂O₃, activated carbons, graphene) were proposed for the construction of anodes. After introducing functionalization materials (oxygen additives) into the ceramic mass, the whole thing was poured onto a spongy, porous polimer matrix with a defined porosity of 20 ppi. The electrodes were baked in an oxygen-free atmosphere at 500-800 °C. The total porosity of the electrode was 72-80%.

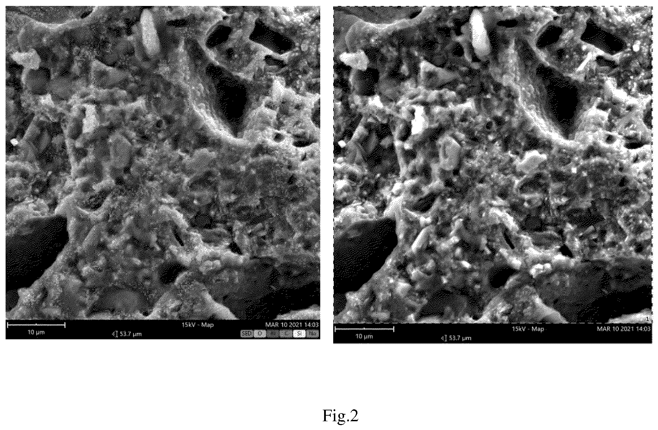

To characterize the morphology of the elemental composition of the porous carbon-ceramic material, Surface imagining using SEM with EDX was performer (Fig.2)

| **Symbol of chemical element** | **Name of the chemical element** | **Atomic concentration/ %** | **Concentration by weight / %** |
|---|---|---|---|
| O | oxygen | 57.82 | 49.32 |
| Al | aluminum | 20.08 | 28.88 |
| C | carbon | 12.94 | 8.29 |
| Si | silicon | 8.39 | 12.56 |
| Na | sodium | 0.78 | 0.95 |

As can be seen from the EDX spectra obtained, the percentage composition of chemical elements on the Surface of the composite indicates that the materia lis mainly composed of aluminosilicates, as evidence by the 28,88% mass content of aluminium inos and the 8,39% mass content of silicon ions. In addition, the Surface layer of the electrode material contains 12,94% wt% carbon. The electrode material produced can be considered a conductive ceramic-carbon composite.

### Example 2

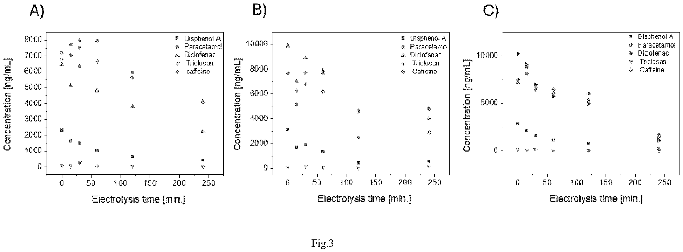

The electrochemical oxidation process was carried out under galvanostatic conditions at three different currents of 50, 125, 250 mA. The electrolysis system consisted of a stainless steel tube electrolyzer filled with three ceramic-carbon electrodes (CWE). The anode was the CWE electrodes while the cathode is a stainless steel tube (ASTM A240, type 316) with external dimensions of 6x13 cm and a wall thickness of 2 mm. The CWE anodes are cylindrical with dimensions of 5x2 cm. A tubular cathode was used to achieve a symmetrical and homogeneous electric field for efficient electro-oxidation across the electrode surface and better mixing of the medium in the reactor. The medium was pumped by a peristaltic pump with a nominal flow rate of 500 ml min⁻¹ . A DC power supply (CPX400DP) and a data acquisition system (NI Compact Rio System) were used. The electrolysis process was carried out under ambient conditions (22° C) for 240 min. Electrolysis was carried out for an environmental sample (water from a wastewater treatment plant) and for artificial wastewater prepared in the laboratory. Diclofenac, caffeine, paracetamol, triclosan and bisphenol were added to both samples (environmental sample and artificial wastewater) to obtain a concentration of 10 mg/L each. The 1-liter medium was circulated in a closed loop, and samples for analysis were taken before addition to the reactor, in the reactor after 30 minutes of circulation under current-free conditions, and after 15, 30, 60, 120 and 240 minutes of electrolysis - Fig.3.

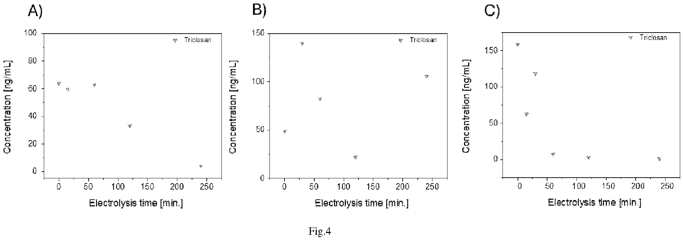

The same amounts of each compound (10 mg to 1 liter) were added to the electrolyzed solution, but lower concentrations were obtained in solution due to low solubility. Fig.4 shows the course of changes in the concentration of triclosan in the environmental sample.

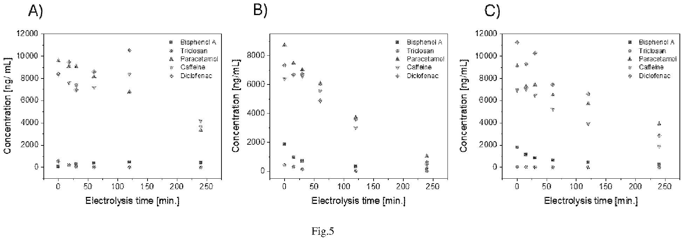

Fig. 5 shows electrolytes carried out on carbon ceramic electrodes (CWE) for 3 different currents of 50, 125 and 250 mA in an artificial effluent sample with 10 mg each of diclofenac, caffeine, paracetamol, triclosan and bisphenol A.

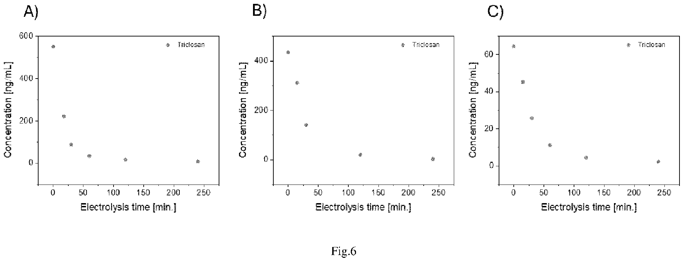

Fig.6 shows the course of changes in the concentration of triclosan in the artificial effluent sample for electrolysis carried out for 3 different currents. The solubility of triclosan can be seen, but the removal process from the solution is effective, and the concentration drops to a few ng/mL.

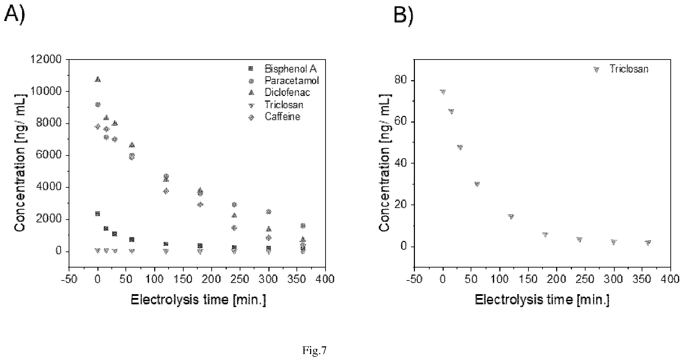

The process was extended to six hours and carried out in artificial effluent prepared in the laboratory with a mixture of organic compounds at 10 mg per liter each - Fig.7.

The concentration of paracetamol drops to 16% of the initial concentration, while the others are below 10%-Bisphenol A 1.5%, diclofenac 7%, triclosan 0.02%, caffeine 4%. The process in the artificial effluent showed better performance compared to the process carried out in the environmental sample. This may be due to the lower conductivity of the medium due to the different chemical composition (different content of ions - electric charge carriers).

## Claims

1. A reactor for the photo-electro-oxidation of organic compounds, having the shape of a tube, in the interior of which there are carbon porous electrodes in the form of discs, the carbon anode structure is insulated from the material by means of a polymer mesh, in the lower and upper parts of the reactor there are quick couplers with two half-clamp collars.

2. The reactor according to claim 1, **wherein** the tube is the cathode and carbon electrodes are the anode.

3. The reactor according to claim 1, **wherein** the disks are matched to the inner diameter of the reactor.

4. The reactor according to claims 1-2, **wherein** the anode is CWE electrodes with dimensions of 5x2 cm, the cathode is a stainless steel tube with external dimensions of 6x13 cm and wall thickness 2 mm.

5. A method of operation of the reactor defined in claim 1 consist of:
- injecting the medium into a tank to which diclofenac, caffeine, paracetamol, triclosan and bisphenol were added to obtain a concentration of 10 mg/L each,
- the medium circulates in a closed loop, thanks to pumps, the control system samples the electrolyzed medium while the electrolyzer is running,
- the electrolysis process is carried out at 22⁰C/240 min,
- the electrolysis process is controlled by an automatic sensor control system,
- it is controlled by means of a logic algorithm, which collects measurement data from the sensor cell and the reactor executive system i.e. pump, reactor electrical power supply.
- signals are taken by a system of measurement cards that record data during electrolysis in a computer, data analysis allows monitoring and predicting the course of the ongoing reaction, where, as required, the logic controls the voltage current values and the flow of liquid in the reactor using an artificial inteligence algorithm.

6. Use of the reactor defined in claim 1 for the treatment of environmental waters from organic compounds, advantageously from pharmaceuticals, from germicidal compounds, from compounds used in the synthesis of polymers.

7. The use according to claim 6, **wherein** the pharmaceuticals are paracetamol, diclofenac.

8. The use according to claim 6, **wherein** the bactericidal compounds are triclosan.

9. The use according to claim 6, **wherein** the compounds used in the synthesis and processing of polymers are BPA, 6-PPD.
